# EUROPÄISCHE PATENTSCHRIFT

(11) **EP 4 110 851 B1**
(45) Veröffentlichungstag und Bekanntmachung des Hinweises auf die Patenterteilung: **20.11.2024**
(21) Anmeldenummer: 21742828.3
(22) Anmeldetag: 13.07.2021
(51) Int. Cl.: C08G 65/40

(54) **POLYETHERETHERKETONE**
POLYETHER ETHER KETONES
POLYÉTHÉRÉTHÉRCÉTONE

(30) Priorität: 16.07.2020 EP 20186169
(43) Veröffentlichungstag der Anmeldung: 04.01.2023
(73) Patentinhaber: Evonik Operations GmbH, 45128 Essen (DE)
(72) Erfinder: MONDRZYK, Adam, 46282 Dorsten (DE); GENSHEIMER, Marco, 47051 Duisburg (DE); DIEKMANN, Wolfgang, 45731 Waltrop (DE)
(74) Vertreter: Evonik Patent Association
(86) Internationale Anmeldenummer: PCT/EP2021/069492
(87) Internationale Veröffentlichungsnummer: WO 2022/013234

(56) Entgegenhaltungen:
- WO-A1-89/04848
- JP-A- S6 211 726
- US-A- 5 290 906
- LIU S J ET AL: "Synthesis and Properties of Poly(aryl ether ketone) Copolymers Containing 2,7-Naphthalene Moieties", CHEMICAL RESEARCH IN CHINESE UNIVERSITIES, BEIJING, CN, vol. 22, no. 1, 1 January 2006 (2006-01-01), pages 114 - 117, XP022855897, ISSN: 1005-9040, [retrieved on 20060101], DOI: 10.1016/S1005-9040(06)60058-5
- LIU SI-JIE ET AL: "Crystallization kinetics of novel poly(aryl ether ketone) copolymers containing 2,7-naphthalene moieties", vol. 102, no. 3, 5 November 2006 (2006-11-05), pages 2527 - 2536, XP009522989, ISSN: 0022-3832, Retrieved from the Internet <URL:https://onlinelibrary.wiley.com/doi/abs/10.1002/app.24678> DOI: 10.1002/APP.24678

## Beschreibung

Die vorliegende Erfindung betrifft Polyetheretherketon-Copolymere, ein Verfahren zu ihrer Herstellung, ihre Verwendung und dreidimensionale Objekte, die aus den Copolymeren erhalten werden können.

In der additiven Fertigung, im Speziellen beim Powder Bed Fusion-Verfahren, werden Materialien benötigt, die u.a. einen geeigneten Schmelzeviskositätsbereich besitzen. Ist die Schmelzeviskosität zu niedrig, fließt die Schmelze über die voreingestellten Bauteilgrenzen in das umliegende Pulverbett und führt so zu Pulveranhaftungen und geringer Konturschärfe. Eine zu hohe Viskosität führt eher dazu, dass die Pulverpartikel im schlimmsten Fall in dem kurzen Zeitfenster des aufgeschmolzenen Zustands nicht oder kaum ineinanderlaufen und infolgedessen ein Bauteil mit geringer Dichte und unzureichenden mechanischen Eigenschaften produziert wird.

Über den Bauprozess hinweg verändert sich das Material aufgrund der längerfristigen thermischen Belastung durch die Bauraumtemperatur, welche üblicherweise rund 20 K unterhalb des Schmelzpunktes liegt. Die Veränderung findet auch bei den Hochtemperaturpolymeren insbesondere in Anwesenheit von Sauerstoff statt. Zu den Hochtemperaturpolymeren zählen Polyaryletherketone wie Polyetheretherketon (PEEK), Polyetherketon (PEK), Polyetherketonketon (PEKK) sowie Polyetherketonetherketonketon (PEKEKK). Mögliche Reaktionsmechanismen während der Temperaturbelastungen können die Nachpolymerisierung und thermisch oder thermooxidativ bedingte Vernetzung und Kettenbruch sein. Dies führt beispielsweise zu einer Veränderung der Schmelzeviskosität. Eine erhöhte Temperatur beschleunigt nach Arrhenius die Alterungsreaktionen. Um Veränderungen des Materials nun so gering wie möglich zu halten (und somit auch eine gewisse Recyclebarkeit des Materials zu gewährleisten, um die Wirtschaftlichkeit des Prozesses zu steigern) ist es also zweckmäßig, a.) sauerstofffrei zu arbeiten, und b.) die Bauraumtemperatur möglichst niedrig zu halten, d.h. zum Beispiel niedrigschmelzende Materialien einzusetzen.

US 5290906 und WO89/048489 beschreiben Polyaryletherketone, die Napthalinringe enthalten. Die Ringe sind im Keton-Monomer enthalten. In JPS 62-011726 werden 1,5- und 2,7-Derivate beschrieben. Das Monomerenverhältnis zu Hydrochinon liegt bei 30:70 bis 70:30. Liu et al. beschreibt Copolymere enthaltend 2,7-Naphthylen-Gruppen (Chem. Res. Chinese U. 2006, 22, 114 und J. Appl. Poly. Sc. 2006, 102, 2527).

Es bestand nunmehr die Aufgabe, Polyaryletherketone zur Verfügung zu stellen, welche die Nachteile des Standes der Technik nicht aufweisen. Es sollten Polyaryletherketone zur Verfügung gestellt werden, die sich in einem Powder Bed Fusion-Verfahren bei niedrigerer Temperatur verarbeiten lassen, wobei vergleichbar gute mechanischen Eigenschaften erzielt werden.

Gelöst werden konnte die Aufgabe durch Polyetheretherketon-Copolymere der Formel (I)

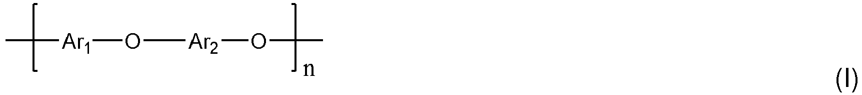

Darin umfasst Ar₁ 75 bis 98 mol-%, bevorzugt 78 bis 97 mol-% und besonders bevorzugt 78 bis 92 mol-%, 1,4-Phenylen-Gruppen und 2 bis 25 mol-%, bevorzugt 3 bis 22 mol-% und besonders bevorzugt 8 bis 22 mol-%, X,Y-Naphthylen-Gruppen, wobei X # Y und X,Y unabhängig voneinander einen ganzzahligen Wert von 1 bis 10 annehmen, vorzugsweise unabhängig voneinander einen ganzzahligen Wert von 1 bis 8. 2,7-Naphthylen-Gruppen sind ausgenommen. Bevorzugte Naphthylen-Gruppen sind ausgewählt aus 1,5-Naphthylen-Gruppen, 2,3-Naphthalen-Gruppen und 2,6-Naphthalen-Grupen, wobei 2,3-Naphthylen-Gruppen und 2,6-Naphthalen-Grupen besonders bevorzugt und 2,3-Naphthylen-Gruppen ganz besonders bevorzugt sind. Die Angaben beziehen sich auf die Stoffmenge an An, wobei sich alle Gruppen Ar₁ zu 100 mol-% addieren. Der Bestandteil Ar₂ umfasst 2,2`-Benzophenon-Gruppen, 2,4`-Benzophenon-Gruppen, 3,3'-Benzophenon-Gruppen, 4,4'-Benzophenon-Gruppen und Mischungen davon, bevorzugt 4,4'-Benzophenon-Gruppen. Der Index n ist 10 bis 10000.

In einer Ausführungsform der Erfindung umfasst Ar₁ weiterhin 1,3-Phenylen-Gruppen oder 1,2-Phenylengruppen. Eine Verbindung (I) kann sowohl 1,3-Phenylen-Gruppen als auch 1,2-Phenylengruppen enthalten.

Die Verbindungen der Formel (I) sollen im Powder Bed Fusion-Verfahren einsetzbar und verarbeitbar sein. Insofern ist es wichtig, dass die Verbindungen bestimmte Viskositätseigenschaften aufweisen. Daher weisen die erfindungsgemäßen Copolymere (I) vorteilhafterweise einen Melt Volume Rate-Wert (MVR) nach DIN EN ISO 1133 als Maß für die Schmelzeviskosität bei 380 °C zwischen 0,2 mL/10 min und 800 mL/10 min auf, wobei Werte zwischen 5 mL/10 min und 200 mL/10 min bevorzugt, zwischen 5 mL/10min und 120 mL/10 min besonders bevorzugt und zwischen 10 mU10 min und 100 mU10 min ganz besonders bevorzugt sind. Das Andruckgewicht beträgt 5 kg. Liegt die Schmelzeviskosität außerhalb dieser Grenzen, führt dies zu den oben genannten Nachteilen.

Darüber hinaus sollten die Verbindungen der Formel (I) längeren thermischen Beanspruchungen standhalten können. Dies kann beispielsweise durch eine Ofenalterung simuliert werden, bei der die Copolymere für 20 h bei einer Temperatur, die 20 K unterhalb des DSC-Schmelzpunktes liegt, in Stickstoff-Atmosphäre eine Änderung der Schmelzeviskosität erfahren. Dementsprechend verringert sich die Schmelzeviskosität erfindungsgemäßer Copolymere, gemessen nach DIN EN ISO 1133 bei 380 °C, gegenüber der Schmelzeviskosität vor der Ofenalterung vorzugsweise um maximal 60 %. Bevorzugt beträgt die Verringerung maximal 50 %, Besonders bevorzugt 5 %-45 %. Die genannten prozentualen Angaben gelten analog für Messungen bei 360 °C bzw. 390 °C. Das Andruckgewicht beträgt 5 kg.

Die erfindungsgemäßen Copolymere weisen vorzugsweise eine Polystyrol-äquivalente gewichtsmittlere molare Masse von 3000 g/mol bis 350000 g/mol auf. Die bevorzugte Polystyrol-äquivalente gewichtsmittlere molare Masse liegt bei 5000 g/mol bis 300000 g/mol. Beide Massen lassen sich mittels Gelpermeationschromatographie nach untenstehender Methode ermitteln.

Durch die erfindungsgemäßen Copolymere können die Bauraumtemperaturen gegenüber bekannten Polyaryletherketonen verringert werden. Die Copolymere weisen vorzugsweise Schmelzpunkte von 250 °C bis 330 °C auf, bevorzugt von 280 °C bis 310 °C (gemessen mittels Dynamischer Differenzkalorimetrie DSC nach DIN 53765 bei einer Heizrate von 20 K/min).

Zur Verarbeitung der erfindungsgemäßen Copolymere in Powder Bed Fusion-Verfahren ist es erforderlich, dass die Copolymere in Pulverform vorliegen. Vorzugsweise beträgt der gewichtsmittlere Korndurchmesser dso bei 10 µm bis 120 µm, vorzugsweise 40 µm bis 90 µm und bevorzugt 50 µm bis 80 µm. Der d₅₀-Wert wird mittels Laserbeugung ermittelt. Pulver können anhand üblicher Verfahren wie Mahlen erhalten werden.

Die Polyetheretherketon-Copolymere der Formel (I) können Additive enthalten. Hierzu zählen Rieselhilfen wie SiO₂ oder Al₂O₃, Pigmente wie TiO₂ oder Ruß, Hitzestabilisatoren wie Organophosphorverbindungen, z. B. Phosphite oder Phosphinate, Flammschutzmittel und Füllstoffen wie Keramikkugeln, Glaskugeln, Glas- oder Carbonfasern sowie Mineralien wie Mica oder Feldspat. SiO₂ als Rieselhilfe weist üblicherweise einen dso von 5 nm bis 100 nm im Primärpartikel auf. Glaskugeln als Füllstoffe können einen dso-Wert von 10 µm bis 800 µm haben.

Die Copolymere können verschiedene Endgruppen aufweisen. Hierbei ist es möglich, dass die Copolymere mindestens eine Endgruppe aufweisen, die ausgewählt sind aus Halogeniden, vorzugsweise F oder CI, und OH. Die Endgruppen können durch einen Überschuss eines Monomers enthaltend Ar₁ bzw. Ar₂ erhalten werden. Beispielsweise kann der Überschuss des einen Monomer-Eduktes gegenüber dem anderen Monomer-Edukt bis zu 5 mol-%, vorzugsweise bis zu 3 mol-%, betragen.

Die erfindungsgemäßen Copolymere können beispielsweise zur Herstellung von dreidimensionalen Objekten in Powder Bed Fusion-Verfahren verwendet werden.

Ein weiterer Gegenstand der Erfindung ist ein Verfahren zur Herstellung der erfindungsgemäßen Polyetheretherketon-Copolymeren der Formel (I). Hierbei werden Phenol-Derivate mit Dihalogenbenzophenon-Derivaten als Monomer-Edukte zur Reaktion gebracht. Die Phenol-Derivate umfassen aus 75 bis 98 mol-%, bevorzugt 78 bis 97 mol-%, Hydrochinon, besonders bevorzugt 78 bis 92 mol-%, und 2 bis 25 mol-%, bevorzugt 3 bis 22 mol-%, besonders bevorzugt 8 bis 22 mol-%, X,Y-Naphthalendihydroxid, wobei X # Y und X,Y unabhängig voneinander einen ganzzahligen Wert von 1 bis 10 annehmen, wobei 2,7-Naphthylendihydroxid ausgenommen ist, jeweils bezogen auf die Stoffmenge an Phenol-Derivaten, wobei die Summe an Bisphenol-Derivaten zu 100 mol-% addieren. Vorzugsweise nehmen X,Y unabhängig voneinander einen ganzzahligen Wert von 1 bis 8 an. Bevorzugte Hydroxide sind ausgewählt aus 1,5-Naphthalendihydroxid, 2,3-Naphthalendihydroxid und 2,6- Naphthalendihydroxid, wobei 2,3-Naphthalendihydroxid und 2,6- Naphthalendihydroxid besonders bevorzugt und 2,3-Naphthalendihydroxid ganz besonders bevorzugt sind. Die Dihalogenbenzophenon-Derivate umfassen 2,2'-Benzophenon-halogenide, 2,4`-Benzophenon-halogenide, 3,3'-Benzophenon-halogenide, 4,4'-Benzophenon-halogenide und Mischungen davon, vorzugsweise 4,4`-Bisphenzylmethanon-halogenide. Bevorzugte Halogenide sind F und CI, besonders bevorzugt sind Difluorbenzophenon-Derivate. Die Phenol-Derivate und die Dihalogenbenzophenon-Derivate können in äquimolaren Mengen eingesetzt werden. Alternativ kann eins der Derivate gegenüber dem anderen in einem Überschuss von bis 5 mol-%, bevorzugt bis zu 3 mol-% eingesetzt werden.

Die zuvor genannte Reaktion wird vorzugsweise in Gegenwart von Alkalimetallcarbonaten, Alkalimetallchloriden oder Mischungen davon durchgeführt, wobei das Alkalimetall bevorzugt aus Lithium, Natrium und Kalium ausgewählt ist. Bevorzugt werden Carbonate eingesetzt, wobei Natriumcarbonat, Kaliumcarbonat oder Mischungen davon besonders bevorzugt sind.

Ein weiterer Gegenstand der Erfindung ist die Verwendung von Polyetheretherketon-Copolymeren der Formel (I) 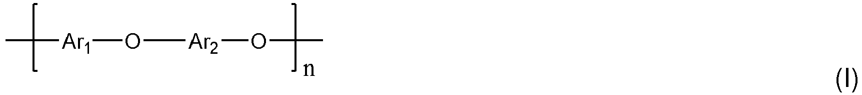 zur Herstellung von dreidimensionalen Objekten in Powder Bed Fusion-Verfahren.

Darin umfasst Ar₁ 40 bis 98 mol-%, bevorzugt 65 bis 97 mol-%, 1,4-Phenylen-Gruppen und 2 bis 60 mol-%, bevorzugt 3 bis 35 mol-%, X,Y-Naphthylen-Gruppen, wobei X # Y und X,Y unabhängig voneinander einen ganzzahligen Wert von 1 bis 10 annehmen, vorzugsweise unabhängig voneinander einen ganzzahligen Wert von 1 bis 8. Weiterhin kann Ar₁ 75 bis 98 mol-%, bevorzugt 78 bis 97 mol-% und besonders bevorzugt 78 bis 92 mol-%, 1,4-Phenylen-Gruppen und 2 bis 25 mol-%, bevorzugt 3 bis 22 mol-% und besonders bevorzugt 8 bis 22 mol-%, X,Y-Naphthylen-Gruppen umfassen. Bevorzugte Naphthylen-Gruppen sind ausgewählt aus 1,5-Naphthylen-Gruppen, 2,3-Naphthalen-Gruppen, 2,6-Naphthalen-Gruppen und 2,7- Naphthylen-Gruppen, wobei 2,3-Naphthylen-Gruppen, 2,6-Naphthalen-Gruppen und 2,7- Naphthylen-Gruppen besonders bevorzugt und 2,3-Naphthylen-Gruppen und 2,7- Naphthylen-Gruppen besonders bevorzugt sind. Die Angaben beziehen sich auf die Stoffmenge an An, wobei sich alle Gruppen Ar₁ zu 100 mol-% addieren. Der Bestandteil Ar₂ umfasst 2,2`-Benzophenon-Gruppen, 2,4'-Benzophenon-Gruppen, 3,3'-Benzophenon-Gruppen, 4,4'-Benzophenon-Gruppen und Mischungen davon, bevorzugt 4,4'-Benzophenon-Gruppen. Der Index n ist 10 bis 10000.

In einer Ausführungsform der Verwendungserfindung umfasst Ar₁ weiterhin 1,3-Phenylen-Gruppen oder 1,2-Phenylengruppen. Eine Verbindung (I) kann sowohl 1,3-Phenylen-Gruppen als auch 1,2-Phenylengruppen enthalten.

Die Verbindungen der Formel (I) wird im Powder Bed Fusion-Verfahren verwendet. Insofern ist es wichtig, dass die Verbindungen bestimmte Viskositätseigenschaften aufweisen. Daher weisen die erfindungsgemäß verwendeten Copolymere (I) vorteilhafterweise einen Melt Volume Rate-Wert (MVR) nach DIN EN ISO 1133 als Maß für die Schmelzeviskosität bei 380 °C zwischen 0,2 mL/10 min und 800 mL/10 min auf, wobei Werte zwischen 5 mL/10 min und 200 mL/10 min bevorzugt, zwischen 5 mL/10min und 120 mL/10 min besonders bevorzugt und zwischen 10 mL/10 min und 100 mL/10 min ganz besonders bevorzugt sind. Das Andruckgewicht beträgt 5 kg. Liegt die Schmelzeviskosität außerhalb dieser Grenzen, führt dies zu den oben genannten Nachteilen.

Darüber hinaus sollten die verwendeten Verbindungen der Formel (I) längeren thermischen Beanspruchungen standhalten können. Dies kann beispielsweise durch eine Ofenalterung simuliert werden, bei der die Copolymere für 20 h bei einer Temperatur, die 20 K unterhalb des DSC-Schmelzpunktes liegt, in Stickstoff-Atmosphäre eine Änderung der Schmelzeviskosität erfahren. Dementsprechend verringert sich die Schmelzeviskosität erfindungsgemäßer Copolymere, gemessen nach DIN EN ISO 1133 bei 380 °C, gegenüber der Schmelzeviskosität vor der Ofenalterung vorzugsweise um maximal 60 %. Bevorzugt beträgt die Verringerung maximal 50 %, Besonders bevorzugt 5 %-45 %. Die genannten prozentualen Angaben gelten analog für Messungen bei 360 °C bzw. 390 °C. Das Andruckgewicht beträgt 5 kg.

Die erfindungsgemäß verwendeten Copolymere weisen vorzugsweise eine Polystyrol-äquivalente gewichtsmittlere molare Masse von 3000 g/mol bis 350000 g/mol auf. Die bevorzugte Polystyrol-äquivalente gewichtsmittlere molare Masse liegt bei 5000 g/mol bis 300000 g/mol. Beide Massen lassen sich mittels Gelpermeationschromatographie nach untenstehender Methode ermitteln.

Durch die erfindungsgemäß verwendeten Copolymere können die Bauraumtemperaturen gegenüber bekannten Polyaryletherketonen verringert werden. Die Copolymere weisen vorzugsweise Schmelzpunkte von 250 °C bis 330 °C auf, bevorzugt von 280 °C bis 310 °C (gemessen mittels Dynamischer Differenzkalorimetrie DSC nach DIN 53765 bei einer Heizrate von 20 K/min).

Zur Verarbeitung der erfindungsgemäß verwendeten Copolymere in Powder Bed Fusion-Verfahren ist es erforderlich, dass die Copolymere in Pulverform vorliegen. Vorzugsweise beträgt der gewichtsmittlere Korndurchmesser d₅₀ bei 10 µm bis 120 µm, vorzugsweise 40 µm bis 90 µm und bevorzugt 50 µm bis 80 µm. Der d₅₀-Wert wird mittels Laserbeugung ermittelt. Pulver können anhand üblicher Verfahren wie Mahlen erhalten werden.

Die verwendeten Polyetheretherketon-Copolymere der Formel (I) können Additive enthalten. Hierzu zählen Rieselhilfen wie SiO₂ oder Al₂O₃, Pigmente wie TiO₂ oder Ruß, Hitzestabilisatoren wie Organophosphorverbindungen, z. B. Phosphite oder Phosphinate, Flammschutzmittel und Füllstoffen wie Keramikkugeln, Glaskugeln, Glas- oder Carbonfasern sowie Mineralien wie Mica oder Feldspat. SiO₂ als Rieselhilfe weist üblicherweise einen d₅₀ von 5 nm bis 100 nm im Primärpartikel auf. Glaskugeln als Füllstoffe können einen dso-Wert von 10 µm bis 800 µm haben.

Die verwendeten Copolymere können verschiedene Endgruppen aufweisen. Hierbei ist es möglich, dass die Copolymere mindestens eine Endgruppe aufweisen, die ausgewählt sind aus Halogeniden, vorzugsweise F oder CI, und OH. Die Endgruppen können durch einen Überschuss eines Monomers enthaltend Ar₁ bzw. Ar₂ erhalten werden. Beispielsweise kann der Überschuss des einen Monomer-Eduktes gegenüber dem anderen Monomer-Edukt bis zu 5 mol-%, vorzugsweise bis zu 3 mol-%, betragen.

Ein weiterer Gegenstand der Erfindung sind dreidimensionale Objekte, welche diejenigen Polyetheretherketon-Copolymere enthalten, die für die Verwendung zur Herstellung von dreidimensionalen Objekten in Powder Bed Fusion-Verfahren herangezogen werden.

### Beispiel

### A. Bestimmungsmethoden

### Schmelzpunkt Tm

Die Bestimmung erfolgte mittels Dynamischer Differenzkalorimetrie im zweiten Aufheizen nach DIN 53765 in einer DSC 7-Anlage von Perkin Elmer. Die Heizrate betrug 20 K/min.

### Schmelzeviskosität (Melt Volume Rate, MVR)

Die Bestimmung erfolgte nach DIN EN ISO 1133 bei 360 °C/380 °C/390 °C Schmelzetemperatur und 5 kg Andruckgewicht.

Die Ofenalterung wurde 20 h unter Stickstoffatmosphäre (1 bar) durchgeführt. Die Temperatur lag 20 K unterhalb der Schmelzetemperatur.

### Korngröße

Der d50-Wert wurde mittels Laserbeugung mit einem Malvern Mastersizer 3000 ermittelt. In einer Trockenmessung wurden 20 g bis 40 g eines Pulvers mittels Aero S Trockendispergiergerät zudosiert. Die Zuführrate der Rüttelrinne betrug 55 %, der Dispergierluftdruck 3 bar. Zur Dispergierung wurde eine Standard-Venturi-Düse verwendet. Die Messzeit der Probe betrug 15 s (150000 Einzelmessungen); Die Abschattungseinstellungen betrugen 0,1% (unteres Limit) und 5% (oberes Limit). Die Auswertung erfolgte über die Fraunhofer-Theorie als Volumenverteilung.

### Molare Masse

Zur Ermittlung Mw mittels GPC wird folgender Versuchsaufbau gewählt:

| Eluent | Chloroform / Dichloressigsäure 80:20 |
|---|---|
| Säulen | PSS polefin, 10 µm, linear xl, ID 8,0 mm x 50 mm |
| | PSS polefin, 10 µm, linear xl, ID 8,0 mm x 300 mm |
| | PSS polefin, 10 µm, linear xl, ID 8,0 mm x 300 mm |
| | PSS polefin, 10 µm, linear xl, ID 8,0 mm x 300 mm |
| Pumpe | PSS SECcurity 1260 HPLC-Pumpe |
| Fluss | 1,0 mL/min |
| Injektionssystem | Agilent 1260 |
| Injektionsvolumen | 50 µl |
| Probenkonzentration | 3 g/L |
| Temperatur | 25 °C |
| Detektor | Agilent 1260 Differentialrefraktometer (RID) |
| Auswertung | PSS WinGPC UniChrom Version 8.3 |

Probenvorbereitung: Die Proben wurden auf einer analytischen Waage eingewogen und mit 4 mL Dichloressigsäure versetzt. Die Proben wurden bei 150 °C in 3 Stunden unter leichtem Schütteln vollständig gelöst. Die abgekühlten Lösungen werden in die vierfache Menge an Chloroform gegeben und vor der Messung über einen PTFE-Einmalfilter mit einer Porengröße von 1 µm filtriert.

Kalibrierung und Auswertung: Zunächst wurde eine Kalibrierkurve mit Polystyrol-Standards im Trennbereich der Säulenkombination durchgeführt. Die Berechnung der Molmassenmittelwerte und deren Verteilung erfolgt mittels der Streifenmethode rechnergestützt, basierend auf der Polystyrol-Kalibrierkurve.

### B. Herstellung der Copolymere

### Beispiel 1

Ein 2L Stahlreaktor mit Rührer, Drehmomentaufnahme, Stickstoffeinlass und Stickstoffauslass wurde mit Diphenylsulfon (670 g, 3,07 mol), Hydrochinon (110,11 g, 1,00 mol), 4,4'-Difluorbenzophenon (218,20 g, 1,00 mol) und Natriumcarbonat (117,65 g, 1,11 mol) beschickt. Der Reaktor wurde verschlossen und inertisiert. Hierzu wurde der Reaktor zunächst mit 3 bar Stickstoff beaufschlagt und der Überdruck anschließend abgelassen. Dieser Vorgang wurde sechsmal wiederholt. Danach wurde der Inhalt unter Überschleierung mit Stickstoff mit einer Heizrate von 5 °C/min auf 150 °C erhitzt. Nach dem Aufschmelzen des Diphenylsulfons wurde der Rührer zugeschaltet. Die Temperatur von 150 °C wurde für 50 min gehalten. Nach der Haltephase wurde die Temperatur mit 1°C/min auf 320 °C gesteigert. Die Endtemperatur wurde so lange gehalten, bis eine zuvor festgelegte Drehmomentdifferenz erreicht war. Nach Erreichen der Zieldrehmomentdifferenz wurde das Reaktionsprodukt aus dem Reaktor in eine Schale aus Edelstahl ausgefahren. Nachdem das Reaktionsprodukt abgekühlt war, wurde es vermahlen und mit Aceton und Wasser gewaschen. Das Reaktionsprodukt wurde in einem Ofen bei 80 °C für 24 h getrocknet. Dieser Prozess resultierte in 200 - 250 g eines Polymerpulvers.

### Beispiele 2-4

Die methodische Vorgehensweise in den Beispielen 2-4 entsprach der in Beispiel 1. Als Unterschied zu Beispiel 1 wurden 5 bis 20 mol-% Hydrochinon durch ein X,Y-Naphthylen ersetzt.

In der folgenden Tabelle sind die Daten der Beispiele zusammengefasst. In allen Fällen ist Ar₂ eine 4,4'-Benzophenon-Gruppe.

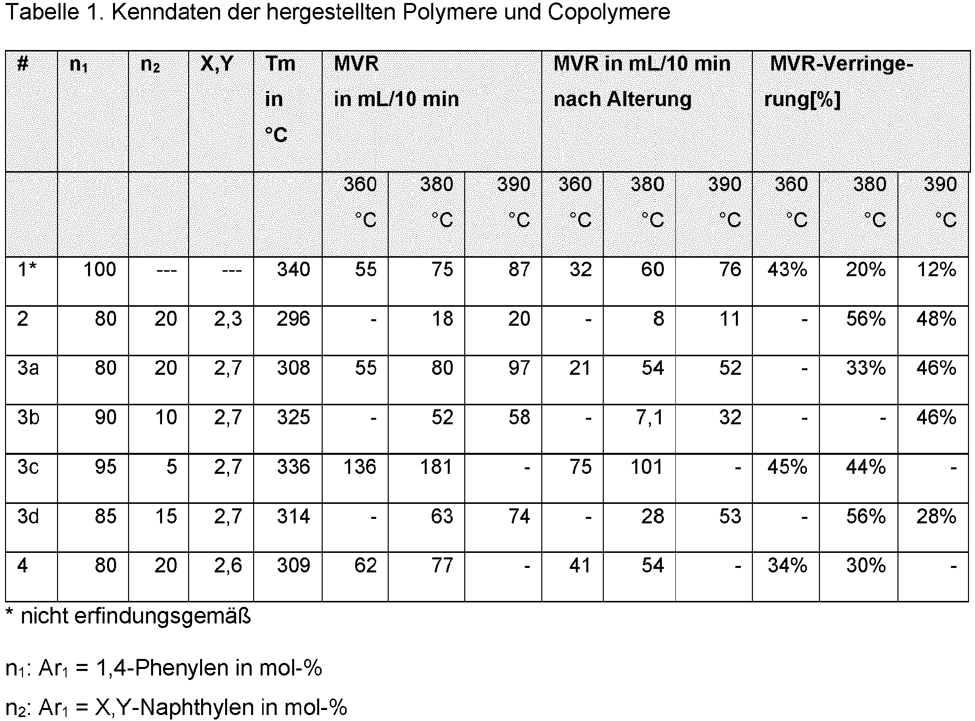

Die Copolymere 2 bis 4 haben einen niedrigeren Schmelzpunkt als das PEEK-Polymer des Standes der Technik (Vergleichsbeispiels 1). Insofern können die Copolymere in Powder Bed Fusion-Verfahren bei niedrigerer Temperatur verarbeitet und verwendet werden als PEEK. Darüber hinaus zeigen die Copolymere 2 bis 4 eine MVR-Verringerung von maximal 56% nach Alterung. Damit widerstehen sie einer längeren thermischen Beanspruchung.

## Patentansprüche

1. Polyetheretherketon-Copolymere der Formel (I) 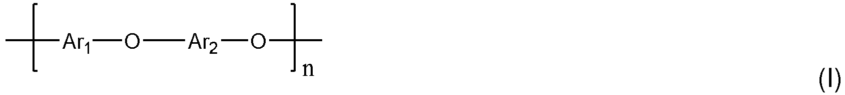 worin
Ar₁ umfasst
a) 75 bis 98 mol-% an 1,4-Phenylen-Gruppen,
b) 2 bis 25 mol-% an X,Y-Naphthylen-Gruppen, wobei X # Y und X,Y unabhängig voneinander einen ganzzahligen Wert von 1 bis 10, besonders bevorzugt unabhängig voneinander einen ganzzahligen Wert von 1 bis 8, annehmen, wobei 2,7-Naphthylen-Gruppen ausgenommen sind,
jeweils bezogen auf die Stoffmenge an An, wobei sich alle Gruppen Ar₁ zu 100 mol-% addieren,
Ar₂ umfasst 2,2`-Benzophenon-Gruppen, 2,4`-Benzophenon-Gruppen, 3,3'-Benzophenon-Gruppen, 4,4'-Benzophenon-Gruppen und Mischungen davon, und
n ist 10 bis 10000.

2. Polyetheretherketon-Copolymere nach Anspruch 1, **dadurch gekennzeichnet, dass** Ar₁ umfasst
65 bis 97 mol-% an 1,4-Phenylen-Gruppen und
3 bis 35 mol-% an X,Y-Naphthylen-Gruppen.

3. Polyetheretherketon-Copolymere nach einem der vorherigen Ansprüche, **dadurch gekennzeichnet, dass** Gruppen Ar₁ weiterhin 1,3-Phenylen-Gruppen oder 1,2-Phenylengruppen umfassen.

4. Polyetheretherketon-Copolymere nach einem der vorherigen Ansprüche, **dadurch gekennzeichnet, dass** die Copolymere mindestens eine Endgruppe aufweisen, die ausgewählt ist aus Halogeniden, vorzugsweise F oder Cl, und OH.

5. Polyetheretherketon-Copolymere nach einem der vorherigen Ansprüche, **dadurch gekennzeichnet, dass** Ar₂ ein 4,4'-Benzophenon-Gruppe ist.

6. Polyetheretherketon-Copolymere nach einem der vorherigen Ansprüche, **dadurch gekennzeichnet, dass** die Copolymere einen MVR-Wert (Melt Volume Rate, 380 °C, 5 kg) nach DIN EN ISO 1133 zwischen 0,2 mL/10 min und 800 mL/10 min, vorzugsweise zwischen 5 mL/10 min und 200 mL/10 min, aufweisen.

7. Polyetheretherketon-Copolymere nach einem der vorherigen Ansprüche, **dadurch gekennzeichnet, dass** die Copolymere nach 20 h Ofenalterung (20 K unterhalb der Schmelzetemperatur, Stickstoff-Atmosphäre, 1 bar) eine Verringerung des Melt Volume Rate (MVR) Werts nach DIN EN ISO 1133 gemessen bei 380 °C von maximal 60 %, vorzugsweise maximal 50 %, besonders bevorzugt 5 % bis 45 % gegenüber dem MVR-Wert vor der Ofenalterung aufweisen.

8. Polyetheretherketon-Copolymere nach einem der vorherigen Ansprüche, **dadurch gekennzeichnet, dass** die Polystyrol-äquivalente gewichtsmittlere molare Masse 3000 g/mol bis 350000 g/mol beträgt, ermittelt mittels Gelpermeationschromatographie.

9. Polyetheretherketon-Copolymere nach einem der vorherigen Ansprüche, **dadurch gekennzeichnet, dass** sie einen Schmelzpunkt von 250 °C bis 330 °C, bevorzugt von 280 °C bis 310 °C aufweisen, gemessen mittels Dynamischer Differenzkalorimetrie nach DIN 53765 bei einer Heizrate von 20 K/min.

10. Polyetheretherketon-Copolymere nach einem der vorherigen Ansprüche, **dadurch gekennzeichnet, dass** die Copolymere als Pulver vorliegen und der gewichtsmittlere Korndurchmesser d₅₀, gemessen mittels Laserbeugung, 10 µm bis 120 µm, vorzugsweise 40 µm bis 90 µm, und bevorzugt 50 µm bis 80 µm, beträgt.

11. Polyetheretherketon-Copolymeren nach einem der vorherigen Ansprüche, weiterhin enthaltend Additive, welche ausgewählt werden aus Rieselhilfen wie SiO₂ oder Al₂O₃, Pigmente wie TiO₂ oder Ruß, Hitzestabilisatoren wie Organophosphorverbindungen, z.B. Phosphite oder Phosphinate und Füllstoffen wie Keramikkugeln, Glaskugeln, Glas- und Carbonfasern sowie Mineralien wie Mica oder Feldspat.

12. Verfahren zur Herstellung von Polyetheretherketon-Copolymeren nach einem der vorherigen Ansprüche, **dadurch gekennzeichnet, dass** Phenol-Derivate mit Dihalogenbenzophenon-Derivaten zur Reaktion gebracht werden,
wobei die Bisphenol-Derivate umfassen
75 bis 98 mol-% Hydrochinon,
2 bis 25 mol-% X,Y-Dihydroxynaphthalin, wobei X # Y und X,Y unabhängig voneinander einen ganzzahligen Wert von 1 bis 10 annehmen, besonders bevorzugt unabhängig voneinander einen ganzzahligen Wert von 1 bis 8, wobei 2,7-Dihydroxynaphthalin ausgeschlossen ist,
jeweils bezogen auf die Stoffmenge an Bisphenol-Derivaten, wobei die Summe an Bisphenol-Derivaten zu 100 mol-% addieren, und
wobei die Dihalogenbenzophenon-Derivate 2,2`-Benzophenon-halogeniden, 2,4'-Benzophenon-halogeniden, 3,3'-Benzophenon-halogeniden, 4,4`-Benzophenon-halogeniden und Mischungen davon umfassen.

13. Verwendung von Polyetheretherketon-Copolymeren der Formel (I) 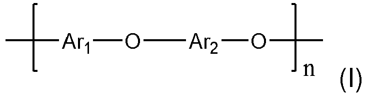 worin
Ar₁ umfasst
a) 40 bis 98 mol-% an 1,4-Phenylen-Gruppen,
b) 2 bis 60 mol-% an X,Y-Naphthylen-Gruppen, wobei X # Y und X,Y unabhängig voneinander einen ganzzahligen Wert von 1 bis 10, besonders bevorzugt unabhängig voneinander einen ganzzahligen Wert von 1 bis 8, annehmen,
jeweils bezogen auf die Stoffmenge an An, wobei sich alle Gruppen Ar₁ zu 100 mol-% addieren,
Ar₂ umfasst 2,2`-Benzophenon-Gruppen, 2,4`-Benzophenon-Gruppen, 3,3'-Benzophenon-Gruppen, 4,4'-Benzophenon-Gruppen und Mischungen davon, und
n ist 10 bis 10000.
zur Herstellung von dreidimensionalen Objekten in Powder Bed Fusion-Verfahren.

14. Dreidimensionales Objekt enthaltend Polyetheretherketon-Copolymere der Formel (I) 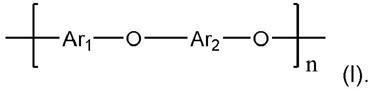 worin
Ar₁ umfasst
a) 40 bis 98 mol-% an 1,4-Phenylen-Gruppen,
b) 2 bis 60 mol-% an X,Y-Naphthylen-Gruppen, wobei X # Y und X,Y unabhängig voneinander einen ganzzahligen Wert von 1 bis 10, besonders bevorzugt unabhängig voneinander einen ganzzahligen Wert von 1 bis 8, annehmen,,
jeweils bezogen auf die Stoffmenge an An, wobei sich alle Gruppen Ar₁ zu 100 mol-% addieren,
Ar₂ umfasst 2,2`-Benzophenon-Gruppen, 2,4`-Benzophenon-Gruppen, 3,3'-Benzophenon-Gruppen, 4,4'-Benzophenon-Gruppen und Mischungen davon, und
n ist 10 bis 10000.

15. Dreidimensionales Objekt nach Anspruch 14, **dadurch gekennzeichnet, dass** eine Verwendung nach einem der Ansprüche 13 vorgenommen wird.

## Claims

1. Polyether ether ketone copolymers of formula (I) 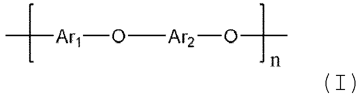 in which
Ar₁ comprises
a) 75 to 98 mol% of 1,4-phenylene groups,
b) 2 to 25 mol% of X,Y-naphthylene groups, wherein X ≠ Y and X and Y independently of one another assume an integer value of 1 to 10, particularly preferably independently of one another assume an integer value of 1 to 8, wherein 2,7-naphthylene groups are excluded,
in each case based on the amount of substance of Ar₁, wherein all Ar₁ groups sum to 100 mol%,
Ar₂ comprises 2,2'-benzophenone groups, 2,4'-benzophenone groups, 3,3'-benzophenone groups, 4,4'-benzophenone groups and mixtures thereof and
n is 10 to 10 000.

2. Polyether ether ketone copolymers according to Claim 1, **characterized in that** Ar₁ comprises
65 to 97 mol% of 1,4-phenylene groups and
3 to 35 mol% of X,Y-naphthylene groups.

3. Polyether ether ketone copolymers according to either of the preceding claims, **characterized in that** Ar₁ groups further comprise 1,3-phenylene groups or 1,2-phenylene groups.

4. Polyether ether ketone copolymers according to any of the preceding claims, **characterized in that** the copolymers comprise at least one end group selected from halides, preferably F or Cl, and OH.

5. Polyether ether ketone copolymers according to any of the preceding claims, **characterized in that** Ar₂ is a 4,4'-benzophenone group.

6. Polyether ether ketone copolymers according to any of the preceding claims, **characterized in that** the copolymers have an MVR value (melt volume rate, 380°C, 5 kg) according to DIN EN ISO 1133 between 0.2 mL/10 min and 800 mL/10 min, preferably between 5 mL/10 min and 200 mL/10 min.

7. Polyether ether ketone copolymers according to any of the preceding claims, **characterized in that** after 20 h of oven aging (20 K below the melt temperature, nitrogen atmosphere, 1 bar) the copolymers exhibit a reduction in the melt volume rate (MVR) value according to DIN EN ISO 1133 measured at 380°C of not more than 60%, preferably not more than 50%, particularly preferably 5% to 45%, compared to the MVR value before the oven aging.

8. Polyether ether ketone copolymers according to any of the preceding claims, **characterized in that** the polystyrene-equivalent weight-average molar mass is 3000 g/mol to 350 000 g/mol determined by gel permeation chromatography.

9. Polyether ether ketone copolymers according to any of the preceding claims, **characterized in that** they have a melting point of 250°C to 330°C, preferably of 280°C to 310°C, measured by differential scanning calorimetry according to DIN 53765 at a heating rate of 20 K/min.

10. Polyether ether ketone copolymers according to any of the preceding claims, **characterized in that** the copolymers are in the form of a powder and the weight-average particle diameter d₅₀ measured by laser diffraction is 10 µm to 120 µm, by preference 40 µm to 90 µm, and preferably 50 µm to 80 µm.

11. Polyether ether ketone copolymers according to any of the preceding claims, further containing additives selected from powder flow additives such as SiO₂ or Al₂O₃, pigments such as TiO₂ or carbon black, heat stabilizers such as organophosphorus compounds, for example phosphites or phosphinates, and fillers such as ceramic beads, glass beads, glass and carbon fibers and minerals such as mica or feldspar.

12. Process for producing polyether ether ketone copolymers according to any of the preceding claims, **characterized in that** it comprises reacting phenol derivatives with dihalobenzophenone derivatives,
wherein the bisphenol derivatives comprise
75 to 98 mol% of hydroquinone,
2 to 25 mol% of X,Y-dihydroxynaphthalene, wherein X ≠ Y and X and Y independently of one another assume an integer value of 1 to 10, particularly preferably independently of one another assume an integer value of 1 to 8, wherein 2,7-dihydroxynaphthalene is excluded,
in each case based on the amount of substance of bisphenol derivatives, wherein the bisphenol derivatives sum to 100 mol% and
wherein the dihalobenzophenone derivatives comprise 2,2'-benzophenone halides, 2,4'-benzophenone halides, 3,3'-benzophenone halides, 4,4'-benzophenone halides and mixtures thereof.

13. Use of polyether ether ketone copolymers of formula (I) 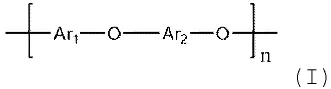 in which
Ar₁ comprises
a) 40 to 98 mol% of 1,4-phenylene groups,
b) 2 to 60 mol% of X,Y-naphthylene groups, wherein X ≠ Y and X and Y independently of one another assume an integer value of 1 to 10, particularly preferably independently of one another assume an integer value of 1 to 8,
in each case based on the amount of substance of Ar₁, wherein all Ar₁ groups sum to 100 mol%,
Ar₂ comprises 2,2'-benzophenone groups, 2,4'-benzophenone groups, 3,3'-benzophenone groups, 4,4'-benzophenone groups and mixtures thereof and
n is 10 to 10 000
for producing three-dimensional objects in the powder bed fusion process.

14. Three-dimensional object containing polyether ether ketone copolymers of formula (I) 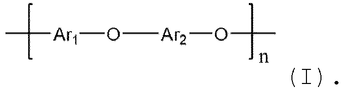 in which
Ar₁ comprises
a) 40 to 98 mol% of 1,4-phenylene groups,
b) 2 to 60 mol% of X,Y-naphthylene groups, wherein X ≠ Y and X and Y independently of one another assume an integer value of 1 to 10, particularly preferably independently of one another assume an integer value of 1 to 8,
in each case based on the amount of substance of Ar₁, wherein all Ar₁ groups sum to 100 mol%,
Ar₂ comprises 2,2'-benzophenone groups, 2,4'-benzophenone groups, 3,3'-benzophenone groups, 4,4'-benzophenone groups and mixtures thereof and
n is 10 to 10 000.

15. Three-dimensional object according to Claim 14, **characterized in that** a use according to Claim 13 is undertaken.

## Revendications

1. Copolymères de polyétheréthercétone de formule (I) 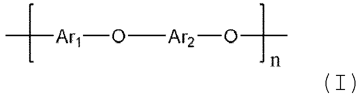 dans laquelle
Ar₁ comprend
a) 75 à 98% en mole de groupes 1,4-phénylène,
b) 2 à 25% en mole de groupes X,Y-naphtylène, où X ≠ Y et X, Y prennent, indépendamment l'un de l'autre, une valeur entière de 1 à 10, de manière particulièrement préférée, indépendamment l'un de l'autre, une valeur entière de 1 à 8, les groupes 2,7-naphthylène étant exclus,
à chaque fois par rapport à la quantité de Ar₁, la somme de tous les groupes Ar₁ valant 100% en mole,
Ar₂ comprend les groupes 2,2'-benzophénone, les groupes 2,4'-benzophénone, les groupes 3,3'-benzophénone, les groupes 4,4'-benzophénone et leurs mélanges et
n vaut 10 à 10.000.

2. Copolymères de polyétheréthercétone selon la revendication 1, **caractérisés en ce que** Ar₁ comprend
65 à 97% en mole de groupes 1,4-phénylène et
3 à 35% en mole de groupes X,Y-naphtylène.

3. Copolymères de polyétheréthercétone selon l'une des revendications précédentes, **caractérisés en ce que** les groupes Ar₁ comprennent en outre les groupes 1,3-phénylène ou les groupes 1,2-phénylène.

4. Copolymères de polyétheréthercétone selon l'une des revendications précédentes, **caractérisés en ce que** les copolymères présentent au moins un groupe terminal qui est choisi parmi les halogénures, de préférence F ou Cl, et OH.

5. Copolymères de polyétheréthercétone selon l'une des revendications précédentes, **caractérisés en ce que** Ar₂ est un groupe 4,4'-benzophénone.

6. Copolymères de polyétheréthercétone selon l'une des revendications précédentes, **caractérisés en ce que** les copolymères présentent une valeur MVR (indice de fluidité à chaud en volume, 380°C, 5 kg) selon la norme DIN EN ISO 1133 entre 0,2 ml/10 min et 800 ml/10 min, de préférence entre 5 ml/10 min et 200 ml/10 min.

7. Copolymères de polyétheréthercétone selon l'une des revendications précédentes, **caractérisés en ce que** les copolymères présentent, après un vieillissement au four pendant 20 h (20 K sous la température de fusion, atmosphère d'azote, 1 bar), une diminution de l'indice de fluidité à chaud en volume (MVR) selon la norme DIN EN ISO 1133, mesuré à 380°C, d'au maximum 60%, de préférence d'au maximum 50%, de manière particulièrement préférée de 5% à 45% par rapport à la valeur MVR avant le vieillissement au four.

8. Copolymères de polyétheréthercétone selon l'une des revendications précédentes, **caractérisés en ce que** la masse molaire moyenne en poids d'équivalents de polystyrène est de 3000 g/mole à 350.000 g/mole, déterminée par chromatographie par perméation de gel.

9. Copolymères de polyétheréthercétone selon l'une des revendications précédentes, **caractérisés en ce qu'**ils présentent un point de fusion de 250°C à 330°C, de préférence de 280°C à 310°C, mesuré par calorimétrie différentielle à balayage dynamique selon la norme DIN 53765 à une vitesse de chauffe de 20 K/min.

10. Copolymères de polyétheréthercétone selon l'une des revendications précédentes, **caractérisés en ce que** les copolymères se trouvent sous forme de poudre et le diamètre de grain moyen en poids d₅₀, mesuré par diffraction laser, est de 10 um à 120 um, de préférence de 40 um à 90 µm et préférentiellement de 50 um à 80 µm.

11. Copolymères de polyétheréthercétone selon l'une des revendications précédentes, contenant en outre des additifs, qui sont choisis parmi les antiagglomérants, tels que SiO₂ ou Al₂O₃, les pigments tels que TiO₂ ou la suie, les stabilisants thermiques tels que les composés organophosphorés, par exemple les phosphites ou les phosphinates, et les charges telles que les billes de céramique, les billes de verre, les fibres de verre et de carbone ainsi que les minéraux tels que le mica ou le feldspath.

12. Procédé de préparation de copolymères de polyétheréthercétone selon l'une des revendications précédentes, **caractérisé en ce que** des dérivés de phénol sont amenés à réagir avec des dérivés de dihalogénobenzophénone,
les dérivés de bisphénol comprenant
75 à 98% en mole d'hydroquinone,
2 à 25% en mole de X,Y-dihydroxynaphtalène, où X ≠ Y et X, Y prennent, indépendamment l'un de l'autre, une valeur entière de 1 à 10, de manière particulièrement préférée, indépendamment l'un de l'autre, une valeur entière de 1 à 8, le 2,7-dihydroxynaphtalène étant exclu,
à chaque fois par rapport à la quantité de dérivés de bisphénol, la somme des dérivés de bisphénol valant 100% en mole et
les dérivés de dihalogénobenzophénone comprenant les halogénures de 2,2'-benzophénone, les halogénures de 2,4'-benzophénone, les halogénures de 3,3'-benzophénone, les halogénures de 4,4'-benzophénone et leurs mélanges.

13. Utilisation de copolymères de polyétheréthercétone de formule (I) 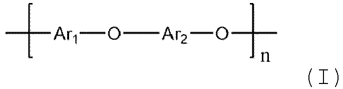 dans laquelle
Ar₁ comprend
a) 40 à 98% en mole de groupes 1,4-phénylène,
b) 2 à 60% en mole de groupes X,Y-naphtylène, où X ≠ Y et X, Y prennent, indépendamment l'un de l'autre, une valeur entière de 1 à 10, de manière particulièrement préférée, indépendamment l'un de l'autre, une valeur entière de 1 à 8,
à chaque fois par rapport à la quantité de Ar₁, la somme de tous les groupes Ar₁ valant 100% en mole,
Ar₂ comprend les groupes 2,2'-benzophénone, les groupes 2,4'-benzophénone, les groupes 3,3'-benzophénone, les groupes 4,4'-benzophénone et leurs mélanges et
n vaut 10 à 10.000,
pour la fabrication d'objets tridimensionnels dans des procédés de fusion en lit de poudre.

14. Objet tridimensionnel contenant des copolymères de polyétheréthercétone de formule (I) 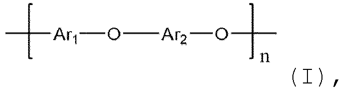 dans laquelle
Ar₁ comprend
a) 40 à 98% en mole de groupes 1,4-phénylène,
b) 2 à 60% en mole de groupes X,Y-naphtylène, où X ≠ Y et X, Y prennent, indépendamment l'un de l'autre, une valeur entière de 1 à 10, de manière particulièrement préférée, indépendamment l'un de l'autre, une valeur entière de 1 à 8,
à chaque fois par rapport à la quantité de Ar₁, la somme de tous les groupes Ar₁ valant 100% en mole,
Ar₂ comprend les groupes 2,2'-benzophénone, les groupes 2,4'-benzophénone, les groupes 3,3'-benzophénone, les groupes 4,4'-benzophénone et leurs mélanges et
n vaut 10 à 10.000.

15. Objet tridimensionnel selon la revendication 14, **caractérisé en ce qu'**une utilisation selon la revendication 13 est mise en œuvre.
